# EUROPÄISCHE PATENTANMELDUNG

(11) **EP 2 578 273 A2**
(43) Veröffentlichungstag der Anmeldung: **10.04.2013**
(21) Anmeldenummer: 12183053.3
(22) Anmeldetag: 05.09.2012
(51) Int. Cl.: A62C 2/06

(54) **Halter für eine Brandschutzmanschette und Verwendung dieses Halters**

(30) Priorität: 05.10.2011 DE 102011084056
(71) Anmelder: HILTI Aktiengesellschaft, 9494 Schaan (LI)
(72) Erfinder: Paetow, Mario, 86859 Igling (DE); Semler, Rudolf, 86931 Prittriching (DE)

(57) **Zusammenfassung**

Das Verankerungselement dient der Verankerung der Vorrichtung an einem Untergrund, das Expansionselement ist dafür vorgesehen mit der Brandschutzmanschette zusammenzuwirken. Das Expansionselement besteht aus Intumeszenzmaterial und ist so zwischen dem Verankerungselement und der Brandschutzmanschette angeordnet, dass es an der Brandschutzmanschette anliegt.

## Beschreibung

Die Erfindung betrifft einen Halter für eine Brandschutzmanschette sowie die Verwendung dieses Halters als Befestigungsmaterial für eine Brandschutzmanschette.

Die um die Rohre oder Kabel herum angeordnete Brandschutzmanschette umfasst Intumeszenzmaterial, welches sich bei Hitze ausdehnt und den Durchbruch möglichst dicht verschließt, so dass eine Ausbreitung des Feuers verhindert werden kann. Je nach Durchmesser des Durchbruches ist es möglich, die Brandschutzmanschette an einem äußeren Ende des Durchbruchs, z.B. an der Wand oder Decke, oder aber direkt in dem Durchbruch anzuordnen. Wird die Brandschutzmanschette am Eingang des Durchbruchs angeordnet (Vorwandmontage), so wird diese üblicherweise mit Halterungen an der Wand oder Decke befestigt. Derartige Brandschutzmanschetten werden beispielsweise in den Anmeldungen DE 10 2008 031 018 A1, DE 102 17 174 A1 und DE 198 52 120 A1 beschrieben. Wird die Brandschutzmanschette in dem Durchbruch angeordnet, so dass nur ein kleiner Teil der Brandschutzmanschette über den Durchbruch hinausragt, ist keine zusätzliche Halterung wie bei der Vorwandmontage erforderlich. In diesem Fall spricht man auch von Brandschutzbandagen oder Brandschutzbändern. Derartige Brandschutzmanschetten werden beispielsweise in den Anmeldungen DE 201 10 973 U1, DE 103 05 903 A1 oder DE 10 2008 059 564 A1 beschrieben. Die Brandschutzmanschetten, welche mit einem Überstand montiert werden, d.h. die teilweise über den Durchbruch hinaus um die Rohre gewickelt werden, werden mit ausreichendem Überstand insbesondere bei dünnwandigen Kunststoffrohren verwendet, damit das intumeszierende Material der Brandschutzmanschette im Brandfall früh genug auf die zur Expansion notwendigen Temperaturen erhitzt werden kann. Bei einer vollständig in den Durchbruch integrierten Brandschutzmanschette werden diese Temperaturen häufig erst zu spät erreicht, so dass das Kunststoffrohr kollabiert, bevor die Brandschutzmanschette zu expandieren beginnt.

Im Sinne der Erfindung umfasst der Begriff *"Brandschutzmanschette"* alle Arten an Umwickelungen von Rohren oder Leitungen mit Brandschutzeigenschaften, insbesondere Brandschutzgewebemanschetten, d.h. Bänder aus Intumeszenzmaterial, die mit einem Gewebeband umwickelt sind, Brandschutzbandagen und Brandschutzbänder, die so beschaffen sind, dass sie aus einem Material bestehen bzw. auf einen Träger aufgebracht sind, das/der so flexibel ist, dass es/er durch den Intumeszenzdruck eines expandierbaren Materials in eine bestimmte Richtung gedrückt werden kann. Diese beispielhafte Auflistung ist nicht einschränkend aufzufassen.

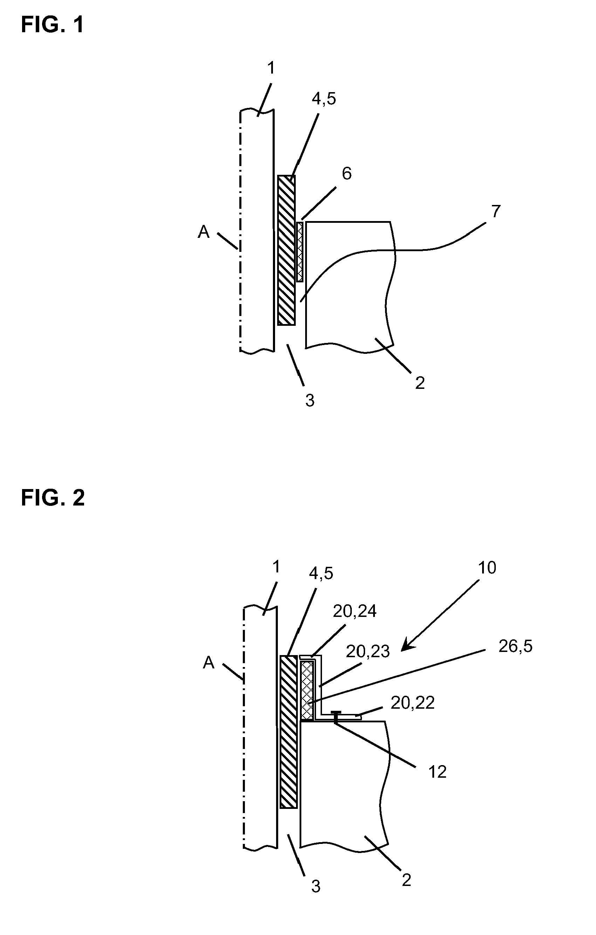

Eine Brandschutzmanschette in Form eines Brandschutzbandes mit Überstand ist beispielhaft in FIG. 1 gezeigt. In einer Wand 2 befindet sich ein Durchbruch 3, durch den ein sich entlang der Längsachse A erstreckendes Rohr 1 geführt ist. Eine Brandschutzmanschette 4, bei der es sich beispielhaft um ein Brandschutzband handelt, das Intumeszenzmaterial 5 umfasst, umschließt das Rohr 1 im Durchbruch 3 in Umfangsrichtung mit einem Überstand, so dass sie teilweise zwischen dem Rohr 1 und dem Durchbruch 3 zum liegen kommt. Die Restöffnung 7, d.h. der verbleibende Spalt zwischen der Brandschutzmanschette 4 und dem Durchbruch 3 kann mit einem Mörtel oder Gips 6 aufgefüllt werden, die gegebenenfalls Brandschutzeigenschaften aufweisen können. Damit wird die Brandschutzmanschette 4 in dem Durchbruch 3 fixiert.

Bei den bekannten Anordnungen besteht jedoch das Problem, dass ein Teil des Intumeszenzmaterials 5 sich in axialer Richtung (d.h. im Wesentlichen parallel zur Längsachse A des Rohres 1) ausbreitet und an der wandseitigen Öffnung des Durchbruchs 3 ausquillt. Ferner ist die Intumeszenz im Bereich des Überstands nicht gerichtet und das Intumeszenzmaterial 5 breitet sich in alle Richtungen aus. Auf diese Weise geht Intumeszenzmaterial verloren und steht nicht zum Verschluss des Durchbruchs 3 zur Verfügung. Diesem Problem wird üblicherweise dadurch begegnet, dass eine entsprechend große Menge an Intumeszenzmaterial 5verwendet wird.

Aufgabe der Erfindung ist es, eine Vorrichtung für eine Brandschutzmanschette anzugeben, die eine effiziente Verwendung der Brandschutzmanschette ermöglicht.

Zur Lösung der Aufgabe ist erfindungsgemäß eine Vorrichtung für eine Brandschutzmanschette vorgesehen, die ein Verankerungselement und ein Expansionselement umfasst. Das Verankerungselement ist zur Verankerung der Vorrichtung an einem Untergrund vorgesehen. Das Expansionselement ist dafür vorgesehen, mit einer Brandschutzmanschette zusammenzuwirken. Das Expansionselement enthält ein Intumeszenzmaterial. Die erfindungsgemäße Vorrichtung beruht auf dem Grundgedanken, eine Brandschutzmanschette im Brandfall aktiv in Richtung eines in dem Untergrund vorhandenen Durchbruchs zu verschieben. Die erfindungsgemäße Vorrichtung kann für alle Brandschutzmanschetten verwendet werden, die weich und flexibel genug sind, dass sie durch den Intumeszenzdruck des Expansionselementes in Richtung des zu verschließenden Durchbruchs gedrückt werden können. Durch die gezielte Verformung der Brandschutzmanschette kann deren Intumeszenzmaterial in Richtung des Durchbruchs gelenkt werden. So wird das Intumeszenzmaterial effektiv genutzt und eine geringere Menge kann in der Brandschutzmanschette vorgesehen werden, was einen Kostenvorteil bedeutet.

Gemäß einer Ausführungsform weist das Verankerungselement zumindest einen ersten und einen zweiten Schenkel auf. Der erste Schenkel kann zur Befestigung des Verankerungselements mit dem Untergrund vorgesehen sein, und das Expansionselement kann an dem zweiten Schenkel des Verankerungselements angeordnet sein.

Bevorzugt weist das Verankerungselement L-förmig angeordnete Schenkel auf.

Gemäß einer Ausgestaltung der Erfindung handelt es sich bei dem einen (zweiten) Schenkel der Vorrichtung um eine Blechlasche, die außerdem mit mindestens einem

Befestigungsmittel, wie ein Haken, versehen sein kann. Dieser Haken ist dazu vorgesehen mit dem Expansionselement zusammenzuwirken und dieses zu sichern. Alternativ kann auch ein Dorn, eine Kralle oder ein anderes gleichwirkendes Mittel zur Sicherung des Expansionselements verwendet werden.

Gemäß einer bevorzugten Ausgestaltung der Erfindung ist der zweite Schenkel mit einem weiteren dritten Schenkel versehen. Dieser weitere dritte Schenkel dient dazu, ein Ausquellen des Intumeszenzmaterials nach oben, d.h. von dem Durchbruch weg, zu verhindern und ist zweckmäßig so dimensioniert, dass er im Wesentlichen dem Querschnitt des Expansionselements entspricht. Die Vorrichtung darf die Intumeszenz des Expansionselements in Richtung der Brandschutzmanschette nicht behindern, da ansonsten nicht mehr gewährleistet ist, dass das expandierende Expansionselement die Brandschutzmanschette in Richtung des Durchbruchs drückt.

Bevorzugt weist das Verankerungselement zwei L-fömig angeordnete Schenkel auf.

Bei dieser Ausgestaltung wird die Brandschutzmanschette nicht durch die Vorrichtung direkt gesichert. Die Vorrichtung kann so an der Wand montiert werden, dass die Brandschutzmanschette zwischen dem Rohr und der Vorrichtung, genauer zwischen dem Rohr und dem Expansionselement eingeklemmt wird. Ferner kann die Brandschutzmanschette so dick gewählt werden, dass sie in den Durchbruch geklemmt werden kann und somit nicht zusätzlich gesichert werden muss. Die Brandschutzmanschette kann alternativ auch durch eine aushärtende Masse, wie Brandschutzschaum, Mörtel oder Gips, fixiert und gesichert werden.

In einer weiteren Ausgestaltung der eben beschriebenen Vorrichtung kann der dritte Schenkel auch so ausgebildet sein, dass er sowohl das Expansionselement als auch die Brandschutzmanschette oben abdeckt und somit ein Ausbreiten des Expansionselements und der Brandschutzmanschette von dem Durchbruch weg, insbesondere in axialer Richtung verhindert.

Gemäß einer weiteren Ausführungsform ist das Expansionselement in einer Schale angeordnet, die ein seitliches Ausquellen des Intumeszenzmaterials des Expansionselementes verhindert. Somit kann der von dem Expansionselement aufgebrachte Intumeszenzdruck effektiv in Richtung der Brandschutzmanschette gelenkt werden. Dabei kann der zweite Schenkel mit Seitenlaschen versehen sein, die sich in Richtung des Expansionselements erstrecken. Auf diese Weise kann die Schale besonders kostengünstig realisiert werden.

Bevorzugt weist die erfindungsgemäße Vorrichtung sowohl einen dritten Schenkel, der auch als Lasche ausgebildet sein kann, und Seitenlaschen auf, um eine Schale zu bilden, die zusammen mit der Wand an der die Vorrichtung fixiert wird, das Expansionselement von fünf Seiten umschließen. Hierdurch kann der von dem Expansionselement aufgebrachte Intumeszenzdruck besonders effektiv und nahezu ohne Verluste in Richtung der Brandschutzmanschette gelenkt werden.

Gemäß einem weiteren Aspekt der Erfindung kann die Vorrichtung gemäß einem oder mehreren der vorgenannten Aspekte der Erfindung als Zusatzelement für eine Brandschutzmanschette verwendet werden. Die bereits im Hinblick auf den Halter genannten Wirkungen und Vorteile treffen in gleicher oder ähnlicher Weise auch auf dessen Verwendung als Zusatzelement für eine Brandschutzmanschette zu.

Weitere Merkmale und Vorteile der Erfindung ergeben sich aus der folgenden Beschreibung vorteilhafter Ausführungsbeispiele unter Bezugnahme auf die beigefügten Zeichnungen. Dabei zeigt:
- FIG.1: eine schematische Schnittansicht eines aus dem Stand der Technik bekannten Halters für eine Brandschutzmanschette,
- FIG. 2: eine schematische Schnittansicht einer Vorrichtung gemäß einem ersten Ausführungsbeispiel,
- FIG.3: eine perspektivische Ansicht einer Vorrichtung gemäß einem zweiten Ausführungsbeispiel,
- FIG. 4: eine schematische Draufsicht dieser Vorrichtung in Schnittrichtung B-B,
- FIG. 5: eine schematische Schnittansicht einer Vorrichtung in einem expandierten Zustand, gemäß einem Ausführungsbeispiel.

FIG. 2 zeigt eine schematische Schnittansicht einer Vorrichtung 10 gemäß einem ersten Ausführungsbeispiel. Die Vorrichtung 10 umfasst ein Verankerungselement 20, welches aus einem ersten, einem zweiten und einem dritten Schenkel 22, 23, 24 besteht. Die Schenkel 22, 23, 24 sind L-förmig zueinander angeordnet. Der erste Schenkel 22 ist mit Hilfe einer Schraube 12 als Befestigungselement an einer Wand 2 befestigt. In der durch den zweiten und dritten Schenkel 23, 24 gebildeten L-förmigen Schale ist ein Expansionselement 26 mit dem Verankerungselement 20 verbunden. Bevorzugt handelt es sich bei dem zweiten Schenkel 23 um eine Blechlasche, der außerdem Befestigungsmittel (nicht in der Figur gezeigt), wie einen Haken oder Dornen oder ein gleichwirkendes Mittel, umfassen kann, der das Expansionselement 26 sichert. Die Brandschutzmanschette 4, welche beispielsweise durch Einschäumen, Eingipsen oder Einmörteln gesichert werden kann, hat die Aufgabe, den Durchbruch 3 der Wand 2 im Brandfall zu verschließen.

Das Expansionselement 26 besteht wie die Brandschutzmanschette 4 aus einem Intumeszenzmaterial 5. Sowohl für die Brandschutzmanschette 4 als auch für das Expansionselement 26 kann Intumeszenzmaterial mit einer herkömmlichen Zusammensetzung, beispielsweise in einer Matrix, insbesondere Polymermatrix gebundene, bekannte Wirksubstanzen, wie Säurebildner, Kohlenstofflieferanten, Treibmittel und physikalisch expandierbare Verbindungen, wie Blähgraphit, verwendet werden. Bei dem Expansionselement 26 handelt es sich bevorzugt um einen flachen Streifen aus Intumeszenzmaterial 5, der mit einer ersten Flachseite an dem zweiten Schenkel 23 des Verankerungselements 20 und mit seiner gegenüberliegenden Flachseite an der Brandschutzmanschette 4 anliegt.

Im Brandfall dehnt sich nicht nur das Intumeszenzmaterial 5 der Brandschutzmanschette 4 sondern auch das Intumeszenzmaterial 5 des Expansionselementes 26 aus. Durch die Expansion des Expansionselementes 26 wird ein Intumeszenzdruck auf die Brandschutzmanschette 4 ausgeübt, wodurch diese gegenüber dem Verankerungselement 20 in Richtung der Öffnung des Durchbruchs gedrückt wird. Das Intumeszenzmaterial 5 der Brandschutzmanschette expandiert somit nicht nur radial, sondern auch axial nach innen gerichtet, d.h. parallel zur Längsachse A des im Brandfall ggf. vernichteten Rohres 1, in Richtung des Durchbruchs 3. Bei der Brandschutzmanschette 4 handelt es sich beispielsweise um eine Gewebemanschette. Es können jedoch auch andere Brandschutzmanschetten 4 verwendet werden, welche weich bzw. flexibel genug sind, so dass diese durch den von dem Expansionselement 26 verursachten Intumeszenzdruck verformt werden können, wie etwa ein Brandschutzband oder eine Brandschutzbandage.

In einer alternativen Ausführungsform kann der zweite Schenkel 23 des Verankerungselements 20 auf der Flachseite, die an die der Brandschutzmanschette gegenüberliegenden Flachseite des Expansionselements 26 anliegt, mit Befestigungsmitteln (nicht gezeigt) versehen sein, wie beispielsweise Dornen oder Haken und dergleichen, welche das Expansionselement 26 sichern. Die Befestigungsmittel können aber auch auf der Seitenkante des zweiten Schenkels 24 angeordnet und beispielsweise in Form von Haken ausgebildet sein, die auf das Expansionselement 26 gerichtet sind. Diese Ausführungsform ist der Einfachheit halber nicht in den Figuren gezeigt.

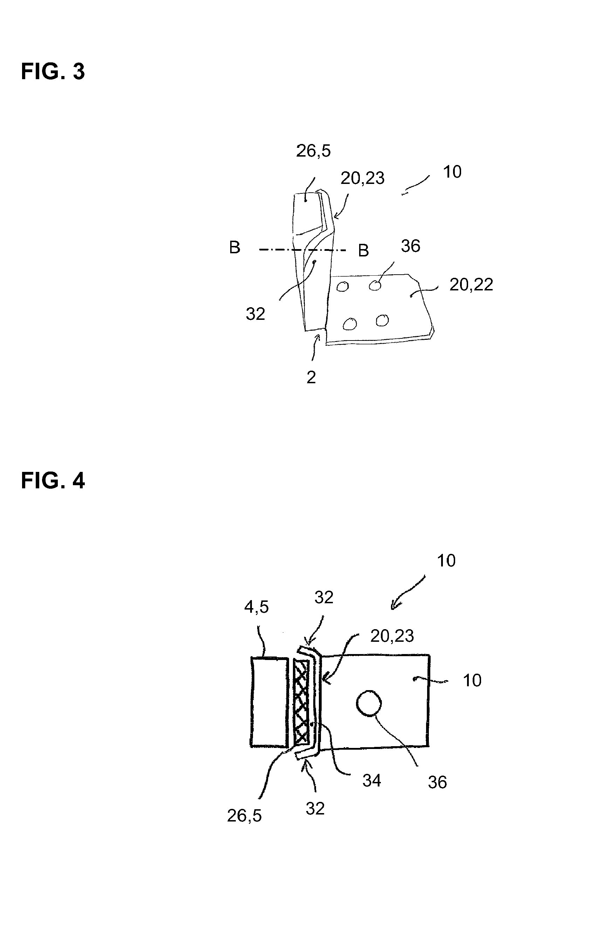

Um einen hinreichend großen Intumeszenzdruck aufbauen zu können, ist es vorteilhaft, wenn die Vorrichtung 10, gemäß einem weiteren Ausführungsbeispiel, eine aus dem Verankerungselement 20 gebildete Schale aufweist, in welcher das Expansionselement 26 angeordnet ist. FIG. 3 zeigt eine solche Vorrichtung 10 in einer vereinfachten, perspektivischen Ansicht. Zur Befestigung der Vorrichtung an einer Wand oder Decke ist der erste Schenkel 22 des Verankerungselements 20 mit vorzugsweise gestanzten Befestigungsöffnungen 36 versehen. Die Vorrichtung 10 kann bevorzugt aus einem Blechstreifen ausgestanzt und in die gewünschte Form gebogen sein.

FIG. 4 zeigt eine solche Vorrichtung 10 in einer schematischen Draufsicht entlang der Schnittkante B-B aus Fig. 3. Der zweite Schenkel 23 des Verankerungselements 20 ist mit Seitenlaschen 32 versehen, die sich in Richtung des Expansionselements 26 erstrecken. Durch die Seitenlaschen 32 kann ein seitliches Ausquellen des Expansionselementes 26 verhindert werden, sodass sich in der Schale 34 ein ausreichend hoher Intumeszenzdruck aufbauen kann.

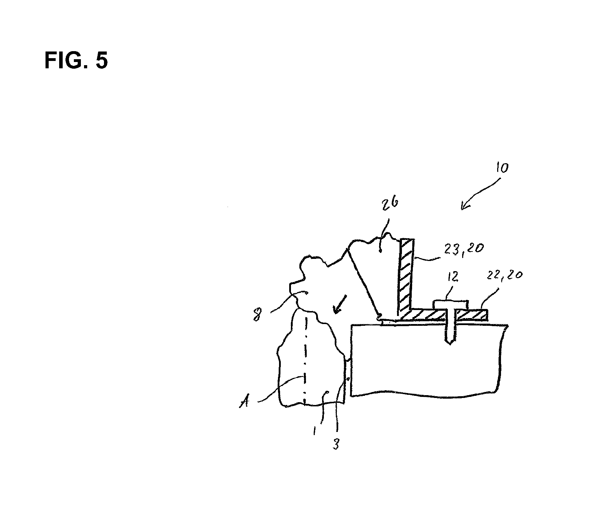

FIG. 5 zeigt eine weitere schematische Schnittansicht einer Vorrichtung 10, bei der in Folge der Brandeinwirkung sich das Intumeszenzmaterial 5 des Expansionselementes 26 ausgedehnt hat, wodurch das Expansionselement 26 aktiviert und die Brandschutzmanschette 4 aus ihrer ursprünglichen Lage gedrückt wurde. Das Intumeszenzmaterial 5 der Brandschutzmanschette 4 ist in Richtung des Durchbruchs 3 expandiert (wie durch einen Pfeil angedeutet) und schützt das bereits zerstörte Rohr 1 vor dem Feuer.

### Bezugszeichenliste

- 1: Rohr
- 2: Wand
- 3: Durchbruch
- 4: Brandschutzmanschette
- 5: Intumeszenzmaterial
- 6: Gips, Mörtel
- 7: Ringspalt / Restöffnung
- 10: Vorrichtung
- 12: Schraube
- 20: Verankerungselement
- 22: erster Schenkel
- 23: zweiter Schenkel
- 24: dritter Schenkel
- 26: Expansionselement
- 32: Seitenlaschen
- 34: Schale
- 36: Befestigungsöffnungen
- A: Längsachse
- B - B: Querschnittsachse

## Patentansprüche

1. Vorrichtung (10) für eine Brandschutzmanschette (4), mit einem Verankerungselement (20) zur Verankerung der Vorrichtung (10) an einem Untergrund (2) und mit einem Expansionselement (26), das dafür vorgesehen ist mit der Brandschutzmanschette (4) zusammenzuwirken, wobei das Expansionselement (26) ein Intumeszenzmaterial (5) ist.

2. Vorrichtung (10) nach Anspruch 1, bei dem das Verankerungselement (20) zumindest einen ersten und einen zweiten Schenkel (22, 24) aufweist, wobei der erste Schenkel (22) zur Befestigung des Verankerungselements (20) mit dem Untergrund (2) vorgesehen ist und das Expansionselement (26) an dem zweiten Schenkel (24) angeordnet ist.

3. Vorrichtung (10) nach Anspruch 2, bei dem das Verankerungselement (20) zwei L-förmig angeordnete Schenkel (22, 24) aufweist.

4. Vorrichtung (10) nach einem der vorhergehenden Ansprüche, bei dem der zweite Schenkel (24) mit mindestens einem Befestigungsmittel (38) versehen ist, das dazu vorgesehen ist, mit dem Expansionselement (26) zusammenzuwirken.

5. Vorrichtung (10) nach einem der vorhergehenden Ansprüche, bei dem das Expansionselement (26) in einer Schale angeordnet ist.

6. Vorrichtung (10) nach Anspruch 5, bei dem das Verankerungselement (20) mit Seitenlaschen (32) versehen ist, die sich in Richtung des Expansionselements (26) erstrecken und die Schale bilden.

7. Verwendung einer Vorrichtung (10) nach einem der Ansprüche 1 bis 6 als Zusatzelement für eine Brandschutzmanschette (4).

8. Verwendung einer Vorrichtung (10) nach einem der Ansprüche 1 bis 6 als Halter für eine Brandschutzmanschette (4).
